# EUROPEAN PATENT SPECIFICATION

(11) **EP 2 511 816 B1**
(45) Date of publication and mention of the grant of the patent: **25.04.2018**
(21) Application number: 11755669.6
(22) Date of filing: 16.03.2011
(51) Int. Cl.: G06F 9/44

(54) **METHOD AND APPARATUS FOR PREVIEWING APPLICATION SUBJECT CONTENT**
VERFAHREN UND VORRICHTUNG ZUR VORABANZEIGE VON ANWENDUNGSTHEMENINHALTEN
PROCÉDÉ ET APPAREIL PERMETTANT DE PRÉVISUALISER UN CONTENU DE SUJET D'APPLICATION

(30) Priority: 17.03.2010 CN 201010127172
(43) Date of publication of application: 17.10.2012
(73) Proprietor: Huawei Device (Dongguan) Co., Ltd., Dongguan, Guangdong 523808 (CN)
(72) Inventor: ZHANG, Yu, Shenzhen Guangdong 518129 (CN); LIU, Zhao, Shenzhen Guangdong 518129 (CN)
(74) Representative: Maiwald Patentanwalts GmbH
(86) International application number: PCT/CN2011/071848
(87) International publication number: WO 2011/113352

(56) References cited:
- EP-A1- 1 715 403
- WO-A1-2005/031551
- WO-A1-2009/045372
- CN-A- 1 677 988
- CN-A- 101 419 546
- CN-A- 101 419 546
- CN-A- 101 770 371
- US-A- 6 028 604
- US-A- 6 028 604
- US-A- 6 160 554
- US-A1- 2005 091 254
- US-A1- 2008 163 122
- US-B1- 6 170 060

## Description

### FIELD OF THE INVENTION

The present invention relates to the field of communications, and in particular, to a method and an apparatus for previewing application subject content.

### BACKGROUND OF THE INVENTION

Currently, in a Java applied management system (Applied Management System, AMS for short), a Java application generally reads a default icon from a Java Archive (Java Archive, jar for short) file and displays the icon on a user interface of a mobile terminal in form of a list. Because the interface is composed of static graphics, it is stiff for terminal users and does not attract the visual perception of the users.

In the process of implementing the present invention, the inventor finds that the prior art at least has the following drawback: a single resource file cannot achieve the effect of a diversified interface, cannot bring strong visual impact to the terminal users, and cannot attract avant-garde persons.

Document US6028604 A discloses a graphical user interface usable to control a computer system using, for example, a remote control device which includes buttons enabling specific functions to aid in the operation of the computer. In order to compensate for the large distance between a user and a large-display, the present invention provides simplified features which permit the user to fully control computer functions on a large screen. D1 discloses highlighting selections of a selection menu so as to enable a user to determine easily from a distance the current position of a selection menu. For example, one way of highlighting the current selection is through the use of a focus frame, an enlarged frame encircling the current selection. The invention also uses alternative colors to represent the current selection, either in combination with the focus frame or without the focus frame.

Document CN101419546 A discloses that the graphical user interface of voice prompting system, the graphical user interface is displayed by a display device, and includes at least one function icon (icon) and a mouse cursor (cursor), the system comprising: a memory module, for storing the respectively corresponding to the function icon the voice text; detection module, is used for detecting the movement of a cursor of the mouse position; a timing module, which is used for setting the time threshold level (threshold) and in function of the mouse cursor moves to the function icon starting timing; searching module, in order to on the mouse cursor dwell time is the time of arrival threshold search for the function icon corresponding to the phonetic text; and voice playing module, in order to broadcast the corresponding speech text to prompt the user to the function icon function, and on the mouse cursor away from the function icon, stop playing the voice text.

Document US 6 160 554 A discloses a method and apparatus for displaying information descriptive of the contents or intended use of a file. In response to a user action, abbreviated data for the file is displayed on a computer monitor in a window opened adjacent to the file icon.

Document WO 2005/031 551 A1 discloses a user interface for a mobile phone where a plurality of commands may be carried out by selecting an icon. If the icon is touched for longer than a predetermined time, an explanatory message associated with the command behind the icon is provided.

Document US 2008 163 122 A1 discloses a file content preview tool that determines an application that a file is associated with, extracts content from the file by calling an application program interface (API) of this application and displays a result.

### SUMMARY OF THE INVENTION

Embodiments of the present invention provide a method and an apparatus for previewing application subject content, so as to obtain file content of a Java AMS without accessing the Java AMS, thereby improving the user experience.

An embodiment of the present invention provides a method for previewing application subject content on a mobile terminal with a Java AMS interface where Java applications are listed as icons, where the method includes:
in response to a user moving a focus, triggering and generating a highlight application request by obtaining the Java application selected on the user interface and retention time of the highlight application request, so as to achieve highlight effect and enable terminal users to clearly know the Java application that obtains the focus, wherein the retention time is the time length that the focus is obtained by the currently selected Java application continuously;
obtaining corresponding file content according to the highlight application request if the retention time is greater than or equal to a preset threshold by:
   obtaining attribute information corresponding to the highlight application request;
   obtaining a path corresponding to the file content according to the attribute information; and
   extracting the file content corresponding to the highlight application request according to the path; and
previewing the file content, wherein the previewing the file content comprises:
   if the file content is a graphics file, displaying the graphics file on a display interface in a dynamic mode in full screen;
   if the file content is a video file, playing the video file on the display interface in full screen; and
   if the file content is an audio file, playing the audio file by using a loudspeaker.

An embodiment of the present invention provides a mobile terminal for previewing application subject content, where said mobile terminal comprises a Java AMS interface where Java applications are listed as icons and further includes:
a first obtaining module, configured to, in response to the user moving a focus, trigger and generate a highlight application request selected on the user interface and retention time of the highlight application request, so as to achieve highlight effect and enable terminal users to clearly know the Java application that obtains the focus, wherein the retention time is the time length that the focus is obtained by the currently selected Java application continuously;
a second obtaining module, configured to obtain corresponding file content according to the highlight application request if the retention time is greater than or equal to a preset threshold, wherein the second obtaining module comprises:
   an attribute obtaining unit, configured to obtain attribute information corresponding to the highlight application request;
   a path obtaining unit, configured to obtain a path corresponding to the file content according to the attribute information; and
   a file obtaining unit, configured to extract the file content corresponding to the highlight application request according to the path; and
a previewing module, configured to preview the file content, wherein the previewing module comprises:
   a display unit, configured to, if the file content is a graphics file, display the graphics file on a display interface in a dynamic mode in full screen;
   a first playing unit, configured to, if the file content is a video file, play the video file on the display interface in full screen; and
   a second playing unit, configured to, if the file content is an audio file, play the audio file by using a loudspeaker.

In the method and the apparatus for previewing application subject content provided by the embodiments of the present invention, the highlight application request selected on the user interface is obtained, and the corresponding file content is obtained according to the highlight application request when the retention time is greater than or equal to the preset threshold, so that the interface style of the selected highlight application and the file content of a Java application can be obtained without accessing the Java application, thereby user experience is improved.

### BRIEF DESCRIPTION OF THE DRAWINGS

The accompanying drawings described herein are provided for further understanding of the present invention, which are a part of the application, but are not intended to limit the present invention. In the accompanying drawings:
FIG. 1 is a flowchart of an embodiment of a method for previewing application subject content according to the present invention;
FIG. 2 is a flowchart of another embodiment of the method for previewing application subject content according to the present invention;
FIG. 3 is a schematic structural diagram of an embodiment of an apparatus for previewing application subject content according to the present invention; and
FIG. 4 is a schematic structural diagram of another embodiment of the apparatus for previewing application subject content according to the present invention.

### DETAILED DESCRIPTION OF THE EMBODIMENTS

To make the objectives, technical solutions, and advantages of the present invention clearer, the present invention is further described in detail below through embodiments with reference to the accompanying drawings. Herein, the exemplary embodiments of the present invention and descriptions of the embodiments are intended to only explain the present invention, instead of limiting the present invention.

According to the Mobile Information Device Profile (Mobile Information Device Profile, MIDP for short), generally there is a Java application descriptor (java application Descriptor java, jad for short) file for a Java application, and the jad file is used for describing attributes of the Java application, such as the information of a provider, version and size.

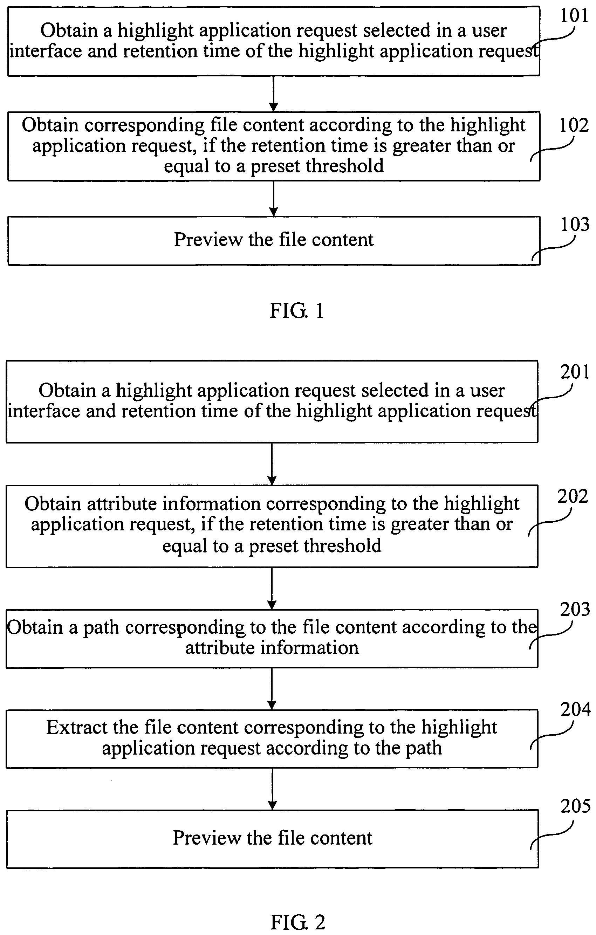

FIG. 1 is a flowchart of an embodiment of a method for previewing application subject content according to the present invention. As shown in FIG. 1, the embodiment includes the following steps:
Step 101: Obtain a highlight application request selected on a user interface and retention time of the highlight application request.
Step 102: Obtain corresponding file content according to the highlight application request if the retention time is greater than or equal to a preset threshold.
Step 103: Preview the file content.

In the method for previewing application subject content provided by the embodiment of the present invention, the highlight application request selected on the user interface is obtained, and the corresponding file content is obtained according to the highlight application request when the retention time is greater than or equal to the preset threshold, so that the interface style of the selected highlight application and the file content of a Java application can be obtained without accessing the Java application, thereby user experience is improved.

FIG. 2 is a flowchart of another embodiment of the method for previewing application subject content according to the present invention. As shown in FIG. 2, this embodiment includes the following steps:
Step 201: Obtain a highlight application request selected on a user interface and retention time of the highlight application request.

Because Java applications are listed on a Java AMS interface as icons, when a user moves a focus, a selected Java application triggers and generates the highlight application request. The terminal further triggers and generates a corresponding highlight application request by obtaining the Java application selected by the user, so as to achieve highlight effect and enable terminal users to clearly know the Java application that obtains the focus. Wherein the Java application may be, for example, a game item. The retention time of the highlight application request in this embodiment refers to the time length that the focus is obtained by the currently selected Java application continuously.

Step 202: Obtain corresponding attribute information of the highlight application request if the retention time is greater than or equal to a preset threshold.

In the MIDP specification, the jad file is a descriptor file for a java application and stores each attribute of the java application; each attribute of the java application includes a field attribute and corresponding content, for example, an attribute of the java application is the size of the file, the size attribute of the file includes a "MIDlet-Jar-Size" field attribute and the corresponding file size value of the "MIDlet-Jar-Size" field attribute. A path of the file content corresponding to the highlight application request may be further obtained by obtaining an attribute of each field and the content corresponding to each field.

Specifically, in the embodiment of the present invention, an extended attribute of a preview attribute (MIDlet-preview) is added in the jad file of the Java application, wherein the extended attribute indicates the file content that needs to be displayed by the current application corresponding to the highlight application request. The file content may specifically be a graphics file, a video file or an audio file.

Step 203: Obtain the path corresponding to the file content according to the attribute information.

Because executable code segments of the Java application and resources that may be used by the Java application are packed as a part of the jad file and stored in a mobile phone, the preview attribute (MIDlet-preview) needs to be used to obtain a path accurately pointing to the file content. Specifically, the Java AMS obtains the field attribute named preview attribute (MIDlet-preview) by parsing each field attribute in the jad file. The value of the field attribute is the path corresponding to the file content, for example, a field attribute is: resource file path + file name + extension of the file name (MIDlet-preview: path + filename + extendname).

Step 204: Extract the file content corresponding to the highlight application request according to the path.

Search and check whether the jad file contains the preview attribute (MIDlet-preview), and if the jad file contains the preview attribute, a corresponding media file exists in the subdirectory of the jad file, and therefore the file content corresponding to the highlight application is obtained.

Step 205: Preview the file content.

Reasonable layout can be made, for example, if the file content is a dynamic graphics of "gif" or a static graphics such as "png", the file content is decoded and displayed in full screen; if the file content is a video file, the video file is played and displayed on a display interface in full screen; while if the file content is an audio file, the original style of the display interface is maintained and the audio file is played by using a loudspeaker.

In the method for previewing application subject content provided by the embodiment of the present invention, the highlight application request selected on the user interface is obtained, and the corresponding file content is obtained according to the highlight application request when the retention time is greater than or equal to the preset threshold, so that the interface style of the selected highlight application and the file content of the Java application can be obtained without accessing the Java application, thereby improving user experience.

In addition, based on the embodiments shown in FIG. 1 and FIG. 2, if the obtained retention time is smaller than the preset threshold, it indicates that the user just accesses the Java AMS, and a Java application list is still displayed according to the display mode in the prior art; while if the obtained retention time is greater than or equal to the preset threshold, the Java application corresponding to the highlight application request is obtained, and the file (preview) content corresponding to the Java application is displayed on the display interface. When a new highlight application request that the user is switched to is obtained, the display content is correspondingly changed according to the new highlight application request. If the file content (for example, the MIDlet-preview or MIDlet-preview) corresponding to the highlight application request does not exist, the file content of the Java AMS is displayed according to the display mode in the prior art.

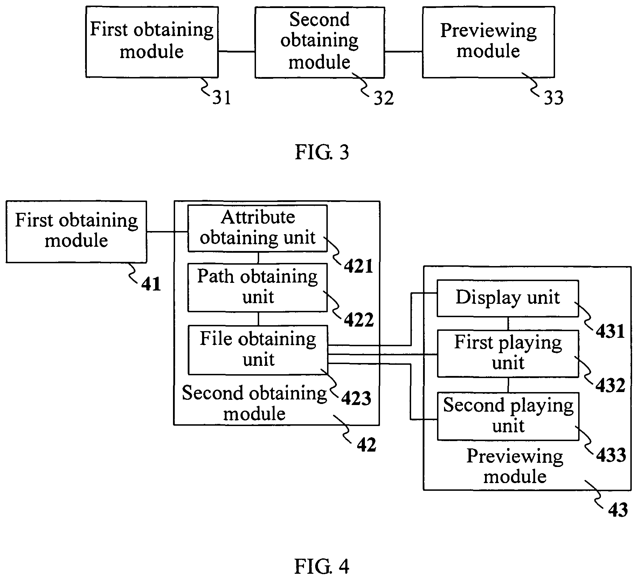

FIG. 3 is a schematic structural diagram of an embodiment of an apparatus for previewing application subject content according to the present invention. As shown in FIG. 3, this embodiment includes: a first obtaining module 31, a second obtaining module 32, and a previewing module 33.

The first obtaining module 31 obtains a highlight application request selected on a user interface and retention time of the highlight application request. If the retention time is greater than or equal to a preset threshold, the second obtaining module 32 obtains corresponding file content according to the highlight application request. The previewing module 33 previews the file content obtained by the second obtaining module 32.

The highlight application request in the embodiment of the present invention may specifically be triggered and generated by a Java application.

In the apparatus for previewing application subject content provided by the embodiment of the present invention, the first obtaining module 31 obtains the highlight application request selected on the user interface, and when the retention time is greater than or equal to the preset threshold, the second obtaining module 32 obtains the corresponding file content according to the highlight application request, so that the interface style of the selected highlight application and the file content of the Java application can be obtained without accessing the Java application, thereby user experience is improved.

FIG. 4 is a schematic structural diagram of another embodiment of the apparatus for previewing application subject content according to the present invention. As shown in FIG. 4, this embodiment includes: a first obtaining module 41, a second obtaining module 42, and a previewing module 43.

The first obtaining module 41 obtains a highlight application request selected on a user interface and retention time of the highlight application request. If the retention time is greater than or equal to a preset threshold, the second obtaining module 42 obtains corresponding file content according to the highlight application request. The previewing module 43 previews the file content obtained by the second obtaining module 42.

Further, the second obtaining module 42 may also include: an attribute obtaining unit 421, a path obtaining unit 422, and a file obtaining unit 423. The attribute obtaining unit 421 obtains attribute information corresponding to the highlight application request. The path obtaining unit 422 obtains a path corresponding to the file content according to the attribute information. The file obtaining unit 423 extracts the file content corresponding to the highlight application request according to the path.

Further, the path obtaining unit 422 may also include: a parsing subunit and an obtaining subunit. The parsing subunit is configured to parse a field attribute in an application descriptor file. The obtaining subunit is configured to obtain a field attribute of a preview attribute from the parsed field attribute field in the application descriptor file, wherein a value of the field attribute is the path corresponding to the file content.

Further, the previewing module 43 may also include: a display unit 431, a first playing unit 432, and a second playing unit 433. If the file content is a graphics file, the display unit 431 displays the graphics file on a display interface in a dynamic mode. If the file content is a video file, the first playing unit 432 plays the video file on the display interface. If the file content is an audio file, the second playing unit 433 plays the audio file by using a loudspeaker.

The highlight application request in the embodiment of the present invention can specifically be triggered and generated by a Java application.

In the apparatus for previewing application subject content provided by the embodiment of the present invention, the first obtaining module 41 obtains the highlight application request selected on the user interface, and when the retention time is greater than or equal to the preset threshold, the second obtaining module 42 obtains the corresponding file content according to the highlight application request, so that the interface style of the selected highlight application and the file content of the Java application can be obtained without accessing the Java application, thereby user experience is improved.

Persons skilled in the art should understand that all or a part of the steps in the method of the embodiments may be accomplished through a program instructing related hardware. The program may be stored in a computer readable storage medium, including a ROM, a RAM, a magnetic disk, a CD disk, or the like.

The objectives, technical solutions, and beneficial effects of the present invention have been described in further detail through the above specific embodiments. It should be understood that the above descriptions are merely specific embodiments of the present invention, but not intended to limit the protection scope of the present invention. Any modification, equivalent replacement, or improvement made without departing from principle of the present invention shall fall within the protection scope of the present invention.

## Claims

1. A method for previewing application subject content on a mobile terminal with a Java AMS interface where Java applications are listed as icons, **characterized by** comprising:
in response to a user moving a focus, triggering and generating (101, 201) a highlight application request by obtaining the Java application selected on the user interface and retention time of the highlight application request, so as to achieve highlight effect and enable terminal users to clearly know the Java application that obtains the focus, wherein the retention time is the time length that the focus is obtained by the currently selected Java application continuously;
obtaining (102) corresponding file content according to the highlight application request if the retention time is greater than or equal to a preset threshold by:
obtaining (202) attribute information corresponding to the highlight application request;
obtaining (203) a path corresponding to the file content according to the attribute information; and
extracting (204) the file content corresponding to the highlight application request according to the path; and
previewing (103) the file content, wherein the previewing the file content comprises:
if the file content is a graphics file, displaying the graphics file on a display interface in a dynamic mode in full screen;
if the file content is a video file, playing the video file on the display interface in full screen; and
if the file content is an audio file, playing the audio file by using a loudspeaker.

2. The method according to claim 1, wherein the obtaining the path corresponding to the file content according to the attribute information comprises:
parsing a field attribute in an application descriptor file; and
obtaining a field attribute of a preview attribute from the parsed field attribute in the application descriptor file, wherein a value of the field attribute of the preview attribute is the path corresponding to the file content.

3. A mobile terminal for previewing application subject content, said mobile terminal comprising a Java AMS interface where Java applications are listed as icons, **characterized by** comprising:
a first obtaining module (31), configured to, in response to the user moving a focus, trigger and generate a highlight application request selected on the user interface and retention time of the highlight application request, so as to achieve highlight effect and enable terminal users to clearly know the Java application that obtains the focus, wherein the retention time is the time length that the focus is obtained by the currently selected Java application continuously;
a second obtaining module (32), configured to obtain corresponding file content according to the highlight application request if the retention time is greater than or equal to a preset threshold, wherein the second obtaining module comprises:
an attribute obtaining unit (421), configured to obtain attribute information corresponding to the highlight application request;
a path obtaining unit (422), configured to obtain a path corresponding to the file content according to the attribute information; and
a file obtaining unit (423), configured to extract the file content corresponding to the highlight application request according to the path; and
a previewing module (33), configured to preview the file content, wherein the previewing module comprises:
a display unit (431), configured to, if the file content is a graphics file, display the graphics file on a display interface in a dynamic mode in full screen;
a first playing unit (432), configured to, if the file content is a video file, play the video file on the display interface in full screen; and
a second playing unit (433), configured to, if the file content is an audio file, play the audio file by using a loudspeaker.

4. The apparatus according to claim 3, wherein the path obtaining unit comprises:
a parsing subunit, configured to parse a field attribute in an application descriptor file; and
an obtaining subunit, configured to obtain a field attribute of a preview attribute from the parsed field attribute in the application descriptor file, wherein a value of the field attribute of the preview attribute is the path corresponding to the file content.

5. A computer-readable medium with a computer program embodied thereon, wherein the computer program makes the computer execute method of claim 1 or 2.

## Patentansprüche

1. Verfahren zum vorherigen Ansehen von Applikationsthema-Inhalt auf einem mobilen Endgerät mit einer Java-AMS-Oberfläche, auf der Java-Applikationen als Symbole aufgelistet werden, **dadurch gekennzeichnet, dass** es Folgendes umfasst:
in Ansprechen darauf, dass ein Benutzer einen Fokus wechselt, Auslösen und Generieren (101, 201) einer Hervorhebungsapplikationsanforderung durch Erhalten der auf der Benutzeroberfläche ausgewählten Java-Applikation und einer Aufrechterhaltungszeit der Hervorhebungsapplikationsanforderung, um einen Hervorhebungseffekt zu erzielen und zu ermöglichen, dass Endgerätbenutzer eindeutig wissen, welche Java-Applikation den Fokus erhält, wobei die Aufrechterhaltungszeit der Zeitabschnitt ist, in dem der Fokus durch die momentan ausgewählte Java-Applikation durchgehend erhalten wird;
Erhalten (102) von entsprechendem Dateiinhalt gemäß der Hervorhebungsapplikationsanforderung, falls die Aufrechterhaltungszeit größer als oder gleich einem vorgegebenen Schwellenwert ist, durch:
Erhalten (202) von der Hervorhebungsapplikationsanforderung entsprechenden Attributinformationen;
Erhalten (203) eines dem Dateiinhalt entsprechenden Pfads gemäß den Attributinformationen; und
Extrahieren (204) des der Hervorhebungsapplikationsanforderung entsprechenden Dateiinhalts gemäß dem Pfad; und
vorheriges Ansehen (103) des Dateiinhalts, wobei das vorherige Ansehen des Dateiinhalts Folgendes umfasst:
falls der Dateiinhalt eine Grafikdatei ist, Anzeigen der Grafikdatei auf einer Anzeigeoberfläche in einem dynamischen Vollbildmodus;
falls der Dateiinhalt eine Videodatei ist, Wiedergeben der Videodatei auf der Anzeigeoberfläche in einem Vollbildmodus; und,
falls der Dateiinhalt eine Audiodatei ist, Wiedergeben der Audiodatei unter Nutzung eines Lautsprechers.

2. Verfahren nach Anspruch 1, wobei das Erhalten des dem Dateiinhalt entsprechenden Pfads gemäß den Attributinformationen Folgendes umfasst:
Parsen eines Feldattributs in einer "Application-Descriptor"-Datei; und
Erhalten eines Feldattributs eines Voransichtattributs aus dem geparsten Feldattribut in der "Application-Descriptor"-Datei, wobei ein Wert des Feldattributs des Voransichtattributs der dem Dateiinhalt entsprechende Pfad ist.

3. Mobiles Endgerät zum vorherigen Ansehen von Applikationsthema-Inhalt, wobei das mobile Endgerät eine Java-AMS-Oberfläche umfasst, auf der Java-Applikationen als Symbole aufgelistet werden, **dadurch gekennzeichnet, dass** es Folgendes umfasst:
ein erstes Erhaltemodul (31), das konfiguriert ist, um in Ansprechen darauf, dass der Benutzer einen Fokus wechselt, eine auf der Benutzeroberfläche ausgewählte Hervorhebungsapplikationsanforderung und eine Aufrechterhaltungszeit der Hervorhebungsapplikationsanforderung auszulösen und zu generieren, um einen Hervorhebungseffekt zu erzielen und zu ermöglichen, dass Endgerätbenutzer eindeutig wissen, welche Java-Applikation den Fokus erhält, wobei die Aufrechterhaltungszeit der Zeitabschnitt ist, in dem der Fokus durch die momentan ausgewählte Java-Applikation durchgehend erhalten wird;
ein zweites Erhaltemodul (32), das konfiguriert ist, um entsprechenden Dateiinhalt gemäß der Hervorhebungsapplikationsanforderung zu erhalten, falls die Aufrechterhaltungszeit größer als oder gleich einem vorgegebenen Schwellenwert ist, wobei das zweite Erhaltemodul Folgendes umfasst:
eine Attributerhalteeinheit (421), die konfiguriert ist, um der Hervorhebungsapplikationsanforderung entsprechende Attributinformationen zu erhalten;
eine Pfaderhalteeinheit (422), die konfiguriert ist, um einen dem Dateiinhalt entsprechenden Pfad gemäß den Attributinformationen zu erhalten; und
eine Dateierhalteeinheit (423), die konfiguriert ist, um den der Hervorhebungsapplikationsanforderung entsprechenden Dateiinhalt gemäß dem Pfad zu extrahieren; und
ein Voransichtmodul (33), das konfiguriert ist, um den Dateiinhalt vorher anzusehen, wobei das Voransichtmodul Folgendes umfasst:
eine Anzeigeeinheit (431), die konfiguriert ist, um, falls der Dateiinhalt eine Grafikdatei ist, die Grafikdatei auf einer Anzeigeoberfläche in einem dynamischen Vollbildmodus anzuzeigen;
eine erste Wiedergabeeinheit (432), die konfiguriert ist, um, falls der Dateiinhalt eine Videodatei ist, die Videodatei auf der Anzeigeoberfläche in einem Vollbildmodus wiederzugeben; und
eine zweite Wiedergabeeinheit (433), die konfiguriert ist, um, falls der Dateiinhalt eine Audiodatei ist, die Audiodatei unter Nutzung eines Lautsprechers wiederzugeben.

4. Vorrichtung nach Anspruch 3, wobei die Pfaderhalteeinheit Folgendes umfasst:
eine Parsing-Untereinheit, die konfiguriert ist, um ein Feldattribut in einer "Application-Descriptor"-Datei zu parsen; und
eine Erhalte-Untereinheit, die konfiguriert ist, um ein Feldattribut eines Voransichtattributs aus dem geparsten Feldattribut in der "Application-Descriptor"-Datei zu erhalten, wobei ein Wert des Feldattributs des Voransichtattributs der dem Dateiinhalt entsprechende Pfad ist.

5. Computerlesbares Medium mit einem darin enthaltenen Computerprogramm, wobei das Computerprogramm veranlasst, dass der Computer das Verfahren nach Anspruch 1 oder 2 ausführt.

## Revendications

1. Procédé de prévisualisation d'un contenu de sujet d'application sur un terminal mobile avec une interface AMS Java où des applications Java sont répertoriées en tant qu'icônes, **caractérisé en ce qu'**il comprend de :
en réponse à un déplacement d'une focalisation par un utilisateur, déclencher et générer (101, 201) une demande de mise en surbrillance d'application en obtenant l'application Java sélectionnée sur l'interface utilisateur et un temps de rétention de la demande de mise en surbrillance d'application, de manière à réaliser un effet de surbrillance et permettre à des utilisateurs de terminaux de connaître clairement l'application Java qui obtient la focalisation, dans lequel le temps de rétention est la durée pendant laquelle la focalisation est obtenue par l'application Java actuellement sélectionnée de façon continue ;
obtenir (102) un contenu de fichier correspondant selon la demande de mise en surbrillance d'application si le temps de rétention est supérieur ou égal à un seuil prédéfini en :
obtenant (202) des informations d'attributs correspondant à la demande de mise surbrillance d'application ;
obtenant (203) un chemin correspondant au contenu de fichier en fonction des informations d'attributs ; et
extrayant (204) le contenu de fichier correspondant à la demande de mise en surbrillance d'application selon le chemin ; et
prévisualiser (103) le contenu de fichier, dans lequel la prévisualisation du contenu de fichier comprend de :
si le contenu de fichier est un fichier graphique, afficher le fichier graphique sur une interface d'affichage dans un mode dynamique en plein écran ;
si le contenu de fichier est un fichier vidéo, lire le fichier vidéo sur l'interface d'affichage en plein écran ; et
si le contenu de fichier est un fichier audio, lire le fichier audio en utilisant un haut-parleur.

2. Procédé selon la revendication 1, dans lequel l'obtention du chemin correspondant au contenu de fichier selon les informations d'attributs comprend de :
analyser un attribut de champ dans un fichier descripteur d'application ; et
obtenir un attribut de champ d'un attribut de prévisualisation à partir de l'attribut de champ analysé dans le fichier descripteur d'application, dans lequel une valeur de l'attribut de champ de l'attribut de prévisualisation est le chemin correspondant au contenu de fichier.

3. Terminal mobile pour prévisualiser un contenu de sujet d'application, ledit terminal mobile comprenant une interface AMS Java où des applications Java sont répertoriées en tant qu'icônes, **caractérisé en ce qu'**il comprend :
un premier module d'obtention (31), configuré pour, en réponse à un déplacement de focalisation par l'utilisateur, déclencher et générer une demande de mise en surbrillance d'application sélectionnée sur l'interface utilisateur et un temps de rétention de la demande de mise en surbrillance d'application, de manière à réaliser un effet de surbrillance et permettre à des utilisateurs de terminaux de connaître clairement l'application Java qui obtient la focalisation, dans lequel le temps de rétention est la durée pendant laquelle l'application Java actuellement sélectionnée obtient la focalisation de façon continue ;
un second module d'obtention (32), configuré pour obtenir un contenu de fichier correspondant selon la demande de mise en surbrillance d'application si le temps de rétention est supérieur ou égal à un seuil prédéfini, dans lequel le second module d'obtention comprend :
une unité d'obtention d'attributs (421), configurée pour obtenir des informations d'attributs correspondant à la demande de mise en surbrillance d'application ;
une unité d'obtention de chemin (422), configurée pour obtenir un chemin correspondant au contenu de fichier en fonction des informations d'attributs ; et
une unité d'obtention de fichier (423), configurée pour extraire le contenu de fichier correspondant à la demande de mise en surbrillance d'application en fonction du chemin ; et
un module de prévisualisation (33), configuré pour prévisualiser le contenu de fichier, dans lequel le module de prévisualisation comprend :
une unité d'affichage (431), configurée pour, si le contenu de fichier est un fichier graphique, afficher le fichier graphique sur une interface d'affichage dans un mode dynamique en plein écran ;
une première unité de lecture (432), configurée pour, si le contenu de fichier est un fichier vidéo, lire le fichier vidéo sur l'interface d'affichage en plein écran ; et
une seconde unité de lecture (433) configurée pour, si le contenu de fichier est un fichier audio, lire le fichier audio en utilisant un haut-parleur.

4. Appareil selon la revendication 3, dans lequel l'unité d'obtention de chemin comprend :
une sous-unité d'analyse, configurée pour analyser un attribut de champ dans un fichier descripteur d'application ; et
une sous-unité d'obtention, configurée pour obtenir un attribut de champ d'un attribut de prévisualisation à partir de l'attribut de champ analysé dans le fichier descripteur d'application, dans lequel une valeur de l'attribut de champ de l'attribut de prévisualisation est le chemin correspondant au contenu de fichier.

5. Support lisible par ordinateur sur lequel est incorporé un programme d'ordinateur, dans lequel le programme d'ordinateur fait exécuter à l'ordinateur un procédé selon la revendication 1 ou 2.
